# FASCICULE DE BREVET EUROPEEN

(11) **EP 2 224 118 B1**
(45) Date de publication et mention de la délivrance du brevet: **04.07.2012**
(21) Numéro de dépôt: 10290057.8
(22) Date de dépôt: 08.02.2010
(51) Int. Cl.: F02D 41/40

(54) **Procédé de contrôle de l'injection d'un carburant dans un moteur à combustion interne à injection directe**
Verfahren zur Steuerung der Krafstoffeinspritzung einer Brennkraftmaschine mit direkter Einspritzung
Fuel injection control method in an internal combustion engine with direct injection

(30) Priorité: 27.02.2009 FR 0900938
(43) Date de publication de la demande: 01.09.2010
(73) Titulaire: IFP Energies nouvelles, 92852 Rueil-Malmaison Cedex (FR)
(72) Inventeur: Kashdan, Julian, 92700 Colombes (FR); Anselmi, Patricia, 92500 Rueil Malmaison (FR); Walter, Bruno, 92700 Colombes (FR)

(56) Documents cités:
- EP-A- 1 122 417
- EP-A- 1 785 616
- DE-A1- 10 141 888
- US-A1- 2004 154 580

## Description

La présente invention se rapporte à un procédé de contrôle de l'injection de carburant dans un moteur à combustion interne à injection directe à autoallumage.

Elle concerne plus particulièrement les moteurs de type Diesel avec une combustion à basse température du mélange carburé, plus communément connue sous le terme de combustion LTC (Low Temperature Combustion).

Ce type de combustion, notamment pour un fonctionnement de ce moteur à faibles charges, a pour avantage de limiter la production de polluants résultant de la combustion et en particulier de limiter la production d'oxydes d'azote (NOx) et de particules.

Cette combustion LTC est généralement réalisée par l'utilisation d'une grande quantité de gaz d'échappement recirculés à l'admission du moteur pour abaisser les températures de combustion et par l'emploi d'un fort prémélange entre l'air et le carburant avec l'obtention d'un mélange relativement homogène avant la combustion. Ceci limite les pics de richesse du mélange et donc les augmentations brutales de température de la combustion qui sont génératrices de NOx élevés.

Cependant, comme il ressort de la publication SAE 2007-01-0907 "End of injection over mixing and unbumed hydrocarbon emissions in Low Temperature Combustion Diesel engines", ce type de combustion LTC a notamment un inconvénient majeur.

En effet, le carburant est généralement injecté par l'intermédiaire d'un injecteur comportant une multiplicité d'orifices d'injection dont l'ouverture est contrôlée par une aiguille notamment. Après la fermeture de ces orifices par cette aiguille, la zone en amont du jet de carburant, c'est-à-dire comprise entre la fin du jet et l'orifice de l'injecteur est une source de production d'hydrocarbures imbrûlés (HC).

Cette production de ces HC est liée, d'une part, aux basses températures de combustion, qui ne permettent pas l'oxydation totale des HC en CO puis en CO2, et, d'autre part, aux très faibles richesses du mélange carburé dans la zone de la fin du jet, qui contient une grande quantité d'air et très peu de carburant, ce qui ne permet pas de réaliser la combustion du carburant dans cette zone.

Il en résulte donc des hydrocarbures imbrûlés (HC) qui sont rejetés dans l'atmosphère au travers de la ligne d'échappement lors de la phase d'échappement de ce moteur.

Pour pouvoir réduire la nocivité de ces rejets d'HC envers l'environnement, il est habituellement prévu d'équiper la ligne d'échappement de système de traitement en dépollution des gaz d'échappement, tel qu'un dispositif de catalyseur, dont le fonctionnement permet de transformer les HC en des constituants non nocifs.

Outre le fait que ce dispositif de catalyseur est d'un coût très élevé, puisque les phases catalytiques sont à base de métaux précieux (platine, palladium,...), il n'est opérationnel que lorsqu'il a atteint sa température de fonctionnement d'environ 200°C (appelée température de "light off"). Cette température ne peut être atteinte qu'après un certain délai de fonctionnement du moteur, ce qui a pour conséquence de rejeter dans l'atmosphère les polluants sans les traiter et notamment de rejeter des HC non traités.

De plus, sur certains points de fonctionnement peu chargés du moteur, il n'est pas possible d'atteindre cette température en régime stabilisé.

Il est également connu par les documents EP-A- 1 122 417, DE 101 41 88, EP-A- 1 785 616 et US 2004/154580 des procédés de contrôle de l'injection d'un carburant qui consiste à introduire le carburant dans la chambre de combustion en plusieurs jets.

Dans ces procédés, l'injection multiples permet de contrôler le déroulement de la combustion en limitant généralement les émissions de NOx mais au détriment de la production de HC.

La présente invention se propose de remédier aux inconvénients ci-dessous en limitant fortement la production de HC à la source, c'est-à-dire au niveau de l'injection de carburant et de la réalisation du mélange carburé.

A cet effet, l'invention concerne un procédé de contrôle de l'injection d'un carburant dans un moteur à combustion interne à injection directe, notamment de type Diesel, comportant un cylindre avec une chambre pour la combustion à basse température d'un mélange carburé et comprenant un injecteur muni d'un nez pourvu d'au moins un orifice pour introduire un jet de carburant dans ladite chambre, caractérisé en ce qu'il consiste à introduire du carburant additionnel dans la zone comprise entre la fin du jet initial de carburant et le nez dudit injecteur dans un délai correspondant à un angle de rotation de vilebrequin compris entre 1° et 5° après la fin de l'injection du jet initial

et à introduire une quantité de carburant additionnel comprise entre 5% et 30% de la quantité de carburant du jet initial de carburant.

Le procédé peut consister à introduire le carburant additionnel avec un mouvement allant dans la même direction et le même sens que le jet initial de carburant.

Le procédé peut consister à introduire le carburant additionnel par un injecteur supplémentaire.

Le procédé peut consister à introduire le carburant additionnel selon au moins un jet de carburant succédant au jet initial de carburant.

Les autres caractéristiques et avantages de l'invention vont apparaître à la lecture de la description qui va suivre, donnée à titre uniquement illustratif et non limitatif, et à laquelle sont annexées :
- la figure 1 qui montre une vue locale d'une partie d'un moteur à combustion interne utilisant le procédé selon l'art antérieur (figure 1 a)) avec un graphe (figure 1 b)) illustrant la teneur de la richesse locale (ø) du mélange carburé en fonction de la distance de l'extrémité aval du jet de carburant (L) par rapport à l'axe de l'injecteur,
- la figure 2 qui illustre la même partie d'un moteur à combustion interne utilisant le procédé selon l'invention (figure 2 a)) avec également un graphe (figure 2 b)) illustrant la teneur de la richesse locale (ø) du mélange carburé en fonction de la distance de l'extrémité aval du jet (L),
- la figure 3 qui présente des graphes comparatifs de l'art antérieur avec l'invention, pour la pression cylindre (P) et pour le dégagement d'énergie (D) dans le cylindre et
- la figure 4 qui illustre la quantité de HC produits selon le procédé de l'art antérieur (MN) et selon le procédé de l'invention (MT).

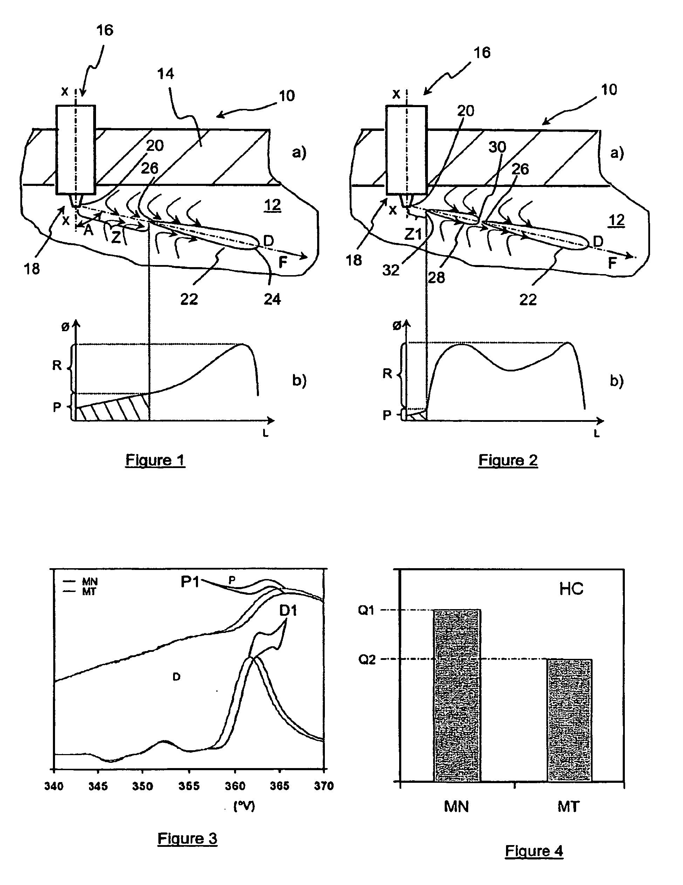

Sur la figure 1 a), il est illustré une vue locale partielle d'un moteur à combustion interne à injection directe à autoallumage fonctionnant avec un mode de combustion à basse température. Ce moteur est préférentiellement de type Diesel mais cela n'écarte en aucune manière les autres types de moteur, comme ceux fonctionnant avec de l'essence ou un carburant gazeux (GNV, GPL,..) et avec un mode de combustion à basse température.

Ce moteur comprend au moins un cylindre 10 dans lequel coulisse un piston (non représenté) en un mouvement alternatif rectiligne. Ce piston permet de délimiter une chambre de combustion 12 formée par les parois (non représentées) du cylindre, la face supérieure du piston et la surface de la culasse 14 en regard de ce piston.

La culasse porte un moyen d'injection de carburant, comme un injecteur 16, qui permet d'introduire du carburant dans la chambre de combustion pour y réaliser un mélange carburé avec le fluide qu'elle contient (air ou air suralimenté avec des gaz d'échappement recirculés).

Cet injecteur, d'axe sensiblement vertical XX, est préférentiellement disposé dans la culasse de manière à ce que son nez 18 débouche dans la chambre de combustion.

Ce nez comporte au moins un orifice d'injection 20 permettant d'introduire du carburant dans la chambre de combustion selon un jet de carburant 22 et cela pendant la phase de fonctionnement du moteur précédent la phase de combustion, comme la phase d'admission ou de compression.

Ce jet est issu de cet orifice et se développe en prenant une forme de gouttelette effilée avec une tête 24 et une queue terminale 26. Ce jet se propage dans la chambre de combustion selon une direction D qui forme un angle A avec l'axe XX de l'injecteur et un sens de propagation allant en s'écartant de l'injecteur (Flèche F). L'énergie générée par le mouvement de l'injection de carburant à très haute pression permet ainsi de favoriser l'entraînement de l'air dans le jet de carburant en formant un mélange carburé à la richesse souhaitée.

Suite à la fermeture de l'orifice d'injection, telle que par une aiguille interne que comporte l'injecteur, et après une durée de fonctionnement du moteur qui correspond à un angle de rotation de vilebrequin compris entre 1° et 5° et préférentiellement à 2°, le jet de carburant est dans la configuration illustrée à la figure 1 a). Dans cette configuration, la queue 26 du jet 22 est à distance de l'injecteur en délimitant une zone Z avec l'orifice d'injection 20 du nez 18, qui est une source d'hydrocarbures imbrûlés (HC).

Cette source de HC, comme décrit précédemment, résulte des très faibles richesses du mélange carburé dans la zone Z qui créent des zones de sous richesses locales et qui ne permettent pas la combustion du carburant.

Dans cette configuration et en se rapportant en plus à la figure 1 b), il peut être relevé que la richesse locale ø du mélange carburé de la zone Z est pauvre (P) et est insuffisante pour permettre l'oxydation du carburant qu'elle contient.

De ce fait, après la combustion du mélange carburé dans la chambre de combustion, il subsistera des HC provenant de cette zone Z et qui seront ensuite évacués dans l'atmosphère par la ligne d'échappement que comporte habituellement tous moteurs.

En se rapportant maintenant à la figure 2 a) qui illustre l'invention, il est prévu d'introduire du carburant dans cette zone Z pour y enrichir le mélange carburé.

Plus précisément, il est prévu d'adopter une stratégie d'injection avec au moins une injection de carburant additionnel à l'injection initiale de la figure 1.

Cette injection additionnelle de carburant est réalisée de manière très rapprochée de l'injection initiale de carburant (dans un délai correspondant à un angle de rotation de vilebrequin compris entre 1° et 5° entre la fin de l'injection précédente et le début de cette injection additionnelle) afin d'enrichir en partie ou en totalité la région comprise entre l'orifice d'injection du nez d'injecteur et la queue du jet de carburant. Ceci permet d'éviter la formation d'une zone Z étendue avec un mélange carburé trop pauvre qui soit favorable à la formation de HC imbrûlés.

Ainsi, l'enrichissement locale de la zone Z est augmentée d'une manière telle que cela permette l'oxydation du carburant présent dans cette zone et une combustion possible avec moins d'émissions de HC, notamment grâce à une extension du domaine de combustion vers le nez d'injecteur.

L'injection de carburant additionnel est d'une durée plus courte correspondant à une quantité moindre de carburant (avantageusement entre 5% et 30% de la quantité de carburant de l'injection initiale).

Préférentiellement, cette injection se fera avec la formation d'un jet additionnel de carburant 28 provenant de l'orifice 20 du nez 18 de l'injecteur 16 et qui est en forme de gouttelette effilée de moindre étendue que l'injection initiale et dont la tête 30 est très proche de la queue 26 du jet initial. Ce jet de carburant additionnel se déroule dans la même direction D et dans le même sens F que le jet initial 22 de carburant.

Compte tenu de l'étendue du jet de carburant additionnel, le mouvement de celui-ci ne génère pas un entraînement d'air conséquent et il se crée une zone Z1 entre la queue terminale 32 du jet additionnel 28 et l'orifice 20 du nez 18 de l'injecteur avec un mélange carburé pauvre P qui est de moindre étendue que la zone Z (voir figure 2 b)).

Cette stratégie d'injections multiples de carburant permet de réduire les émissions de HC tout en produisant une faible quantité de NOx, notamment sur les points de fonctionnement du moteur les moins chargés.

Bien entendu et cela sans sortir du cadre de l'invention, il peut être prévu de réaliser une autre injection de carburant à l'injection additionnelle décrit ci-dessus.

Cette autre injection additionnelle de carburant, qui est également réalisée de manière très rapprochée de l'injection additionnelle, permet d'enrichir en partie ou en totalité la région Z1 comprise entre l'orifice d'injection du nez d'injecteur et la queue du jet de carburant additionnel. Ceci permet de diminuer encore plus la zone qui comporte un mélange carburé trop pauvre favorable à la formation de HC imbrûlés.

Préférentiellement et comme déjà décrit en relation avec l'injection de carburant additionnel, cette injection se réalisera sous la forme d'un jet de carburant en forme de gouttelette effilée de moindre étendue que l'injection initiale et provenant de l'injecteur 16. Ce jet de carburant se déroulera dans la même direction D et dans le même sens F que les jets additionnels et initial de carburant.

Sur les figures 3 et 4 sont illustrés des exemples de résultats obtenus pour un moteur fonctionnant à faible régime et faible charge moteur (1200 tr/min et 2 bars de PMI) avec un mode de combustion LTC sans et avec le procédé de l'invention.

Sur la figure 3, la valeur maximale D1 du dégagement d'énergie (D) et la valeur maximale P1 de la pression cylindre (P) pour un moteur fonctionnant avec une seule injection de carburant (MN) et pour un moteur fonctionnant avec un injection initiale et une injection additionnelle sont quasiment inchangées.

Par contre, comme indiqué sur la figure 4, la quantité Q2 d'hydrocarbures imbrûlés (HC) pour un moteur fonctionnant avec un injection initiale et une injection additionnelle (MT) est réduite d'environ 30% par rapport à la quantité Q1 d'hydrocarbures imbrûlés pour le même moteur fonctionnant avec un injection unique (MN).

La présente invention n'est pas limitée à l'exemple décrit mais englobe toutes variantes couvertes par les revendications.

Notamment, il peut être envisagé d'utiliser un injecteur de carburant supplémentaire placé dans la culasse ou à proximité de celle-ci pour injecter le carburant additionnel dans la zone Z.

Il peut aussi être envisagé d'utiliser un injecteur de carburant multi orifices avec des levées d'aiguilles qui permettent de réaliser une injection initiale de carburant et au moins une injection additionnelle de ce carburant.

## Revendications

1. Procédé de contrôle de l'injection d'un carburant dans un moteur à combustion interne à injection directe, notamment de type Diesel, comportant un cylindre (10) avec une chambre (12) pour la combustion à basse température d'un mélange carburé et comprenant un injecteur (16) muni d'un nez (18) pourvu d'au moins un orifice (20) pour introduire un jet de carburant (22) dans ladite chambre, **caractérisé en ce qu'**il consiste à introduire du carburant additionnel dans la zone (Z) comprise entre la fin (26) du jet initial (22) de carburant et le nez (18) dudit injecteur dans un délai correspondant à un angle de rotation de vilebrequin compris entre 1° et 5° après la fin de l'injection du jet initial et à introduire une quantité de ce carburant additionnel comprise entre 5% et 30% de la quantité de carburant du jet initial de carburant.

2. Procédé de contrôle de l'injection d'un carburant selon la revendication 1, **caractérisé en ce qu'**il consiste à introduire le carburant additionnel avec un mouvement allant dans la même direction (D) et le même sens (F) que le jet initial de carburant.

3. Procédé de contrôle de l'injection d'un carburant selon la revendication 1 ou 2, **caractérisé en ce qu'**il consiste à introduire le carburant additionnel par un injecteur supplémentaire.

4. Procédé de contrôle de l'injection d'un carburant selon l'une des revendications précédentes, **caractérisé en ce qu'**il consiste à introduire le carburant additionnel selon au moins un jet de carburant (28) succédant au jet initial de carburant.

## Claims

1. A method of controlling the injection of a fuel into a direct-injection internal-combustion engine, notably of Diesel type, comprising a cylinder (10) with a chamber (12) for low-temperature combustion of a fuel mixture and comprising an injector (16) provided with a nozzle (18) fitted with at least one orifice (20) for feeding a fuel jet (22) into said chamber, **characterized in that** it consists in feeding an additional fuel into zone (Z) contained between end (26) of initial fuel jet (22) and nozzle (18) of said injector in a time interval corresponding to a crank angle ranging between 1° and 5° after the end of the initial fuel injection and in feeding a proportion of this additional fuel ranging between 5 % and 30 % of the amount of fuel of the initial fuel jet.

2. A fuel injection control method as claimed in claim 1, **characterized In that** it consists in feeding the additional fuel with a movement having the same direction (D) and the same direction (F) as the initial fuel jet.

3. A fuel injection control method as claimed in claim 1 or 2, **characterized In that** it consists in feeding the additional fuel by means of an additional injector.

4. A fuel injection control method as claimed in any one of the previous claims, **characterized in that** it consists in feeding the additional fuel in at least one fuel jet (28) following the initial fuel jet.

## Patentansprüche

1. Verfahren zur Steuerung der Einspritzung eines Kraftstoffs in eine Brennkraftmaschine mit Direkteinspritzung, insbesondere einen Dieselmotor, der einen Zylinder (10) mit einer Kammer (12) für die Verbrennung eines Kraftstoffgemischs bei niedriger Temperatur aufweist und eine Einspritzdüse (16) umfasst, die mit einer Nase (18) ausgestattet ist, die mit mindestens einer Öffnung (20) zum Einführen eines Kraftstoffstrahls (22) in die Kammer versehen ist, **dadurch gekennzeichnet, dass** es darin besteht, zusätzlichen Kraftstoff in den Bereich (Z), der sich zwischen dem Ende (26) des anfänglichen Kraftstoffstrahls (22) und der Nase (18) der Einspritzdüse befindet, innerhalb eines Zeitraums einzuführen, der einem Kurbelwellen-Drehwinkel zwischen 1° und 5° nach dem Ende der Einspritzung des anfänglichen Strahls entspricht, und eine Menge dieses zusätzlichen Kraftstoffs einzuführen, die zwischen 5 % und 30 % der Kraftstoffmenge des anfänglichen Kraftstoffstrahls beträgt.

2. Verfahren zur Steuerung der Einspritzung eines Kraftstoffs nach Anspruch 1, **dadurch gekennzeichnet, dass** es darin besteht, den zusätzlichen Kraftstoff mit einer Bewegung einzuführen, die in derselben Richtung (D) und demselben Sinn (F) verläuft wie der anfängliche Kraftstoffstrahl.

3. Verfahren zur Steuerung der Einspritzung eines Kraftstoffs nach Anspruch 1 oder 2, **dadurch gekennzeichnet, dass** es darin besteht, den zusätzlichen Kraftstoff durch eine zusätzliche Einspritzdüse einzuspritzen,

4. Verfahren zur Steuerung der Einspritzung eines Kraftstoffs nach einem der vorhergehenden Ansprüche, **dadurch gekennzeichnet, dass** es darin besteht, den zusätzlichen Kraftstoff mittels mindestens eines Kraftstoffstrahls (28) einzuführen, der auf den anfänglichen Kraftstoffstrahl folgt.
